# EUROPEAN PATENT APPLICATION

(11) **EP 2 843 493 A1**
(43) Date of publication of application: **04.03.2015**
(21) Application number: 13182306.4
(22) Date of filing: 30.08.2013
(51) Int. Cl.: G05B 23/02

(54) **Method of analyzing an operation of a technical system and system for analyzing an operation of a technical system**

(71) Applicant: Empolis Information Management GmbH, 67657 Kaiserslautern (DE)
(72) Inventor: Lenz, Mario, 67657 Kaiserslautern (DE)
(74) Representative: DREISS Patentanwälte PartG mbB

(57) **Abstract**

The invention relates to a method of analyzing an operation of a technical system (100a, 100b), particularly of a machine (100a) and/or a technical installation (100b), comprising the following steps:
- collecting (200) operating data which characterizes an operation of said system (100a, 100b), to obtain collected operating data (10),
- processing (210) said collected operating data (10) according to predetermined criteria to obtain processed operating data (10a),
- determining (220) whether one or more predetermined events (E_1, E_2, E_3) are comprised in said collected operating data (10) and/or said processed operating data (10a) to obtain one or more identified events,
- determining (230), based on said one or more identified events, one or more indications (I_1, I_2) which characterize an operational state and/or a transition between operational states of said technical system (100a, 100b).

## Description

### Field of the invention

The invention relates to a method of analyzing an operation of a technical system, particularly of a machine and/or a technical installation.

The invention further relates to a system for analyzing an operation of a technical system, particularly of a machine and/or a technical installation.

### Background

Conventional methods of analyzing an operation of a technical system comprise generating log files of the system, wherein said log files are manually analyzed from time to time by service technicians or experts that are required to have a profound knowledge and experience regarding operation of said system to properly interpret the log files.

However, even if said log files are analyzed by skilled experts periodically, the conclusions that may be derived from such analysis are rather limited and only relate to past events in the operation of said system.

### Summary

Thus, it is an object of the present invention to provide an improved method of and an improved system for analyzing an operation of a technical system which avoid the drawbacks of the conventional approaches.

Regarding the aforementioned method, according to the embodiments, this object is achieved by
- collecting operating data which characterizes an operation of said system, to obtain collected operating data,
- processing said collected operating data according to predetermined criteria to obtain processed operating data,
- determining whether one or more predetermined events are comprised in said collected operating data and/or said processed operating data to obtain one or more identified events,
- determining, based on said one or more identified events, one or more indications which characterize an operational state and/or a transition between operational states of said technical system.

The determination whether predetermined events can be found in the operating data and the determination of said one or more indications based on so identified events advantageously enables an efficient analysis of the operation of the technical system which can be automated to a high degree. Thus, even such technical systems or their operation, respectively, can reliably be analyzed which yield an amount of operating data that cannot be handled by human experts any more.

By considering the predetermined events and indications according to the principle of the embodiments, relationships between one or more portions of said operating data may be analyzed in a well-defined, standardized manner which ensures a constant quality of information on an operational state and/or state transitions of the technical system.

According to an embodiment, it is also possible to perform a step of inferring the state of said technical system based on the said events and a knowledge-based representation of potential symptoms and fault states.

According to an embodiment, said step of collecting may be performed periodically or in real-time, e.g. collecting the operating data as soon as it is generated by the technical system or components thereof. Periodical collection may e.g. be performed in intervals of some seconds or minutes. According to further embodiments, said intervals may also comprise one or more hours or days or even longer time spans.

According to an embodiment, one or more search indexes depending on said collected operating data and/or depending on said one or more predetermined events are created and/or used, whereby time-efficient access to the data to be analyzed is enabled.

In one embodiment, said one or more search indexes may be provided by an external system which does not form part of the system according to the embodiments. This external system may receive operating data from the technical system to be analyzed and may generate said one or more search indexes, which are then made available to the system according to the embodiments for retrieving operating data.

In another embodiment, said one or more search indexes may be created by the system according to the embodiments. In this embodiment, the system according to the embodiments itself may receive operating data from the technical system to be analyzed and may generate said one or more search indexes.

The generation of said one or more search indexes may be performed by employing conventional techniques known to the skilled man.

According to a further embodiment, for creation of said one or more search indexes, said one or more predetermined events may be considered. Thus, it is e.g. possible to efficiently build search indexes by considering only such operating data which is related to one or more predetermined events. In other words, operating data which is not related to said one or more predetermined events, is not required to be considered and/or processed for building the search index(es) according to this embodiment. For example, prior to building the search index(es), operating data unrelated to the predetermined events may be removed by filtering or the like, which reduces the overall amount of data to be processed.

According to a further embodiment, said step of processing comprises at least one of:
- storing at least a portion of said collected operating data,
- sorting at least a portion of said collected operating data,
- applying a time stamp to at least a portion of said collected operating data,
- converting a format of at least a portion of said collected operating data from a source format to a target format.

According to an embodiment, operating data may be received or collected from a plurality of components of the technical system under consideration and may be stored by the system according to the embodiments. For this purpose, the system according to the embodiments may comprise volatile and/or non-volatile storage devices which may e.g. comprise RAM (random access memory), hard disk drives (HDD), solid state disk drives (SSD), optical storage systems, or other suitable storage systems or any combination thereof.

According to an embodiment, sorting at least a portion of said collected operating data may e.g. comprise aggregating operating data from different sources such as e.g. components of the technical system under consideration, and if said operating data comprises time stamps, operating data portions of said different sources may e.g. be sorted according to its time stamps.

According to another embodiment, said step of processing may also comprise applying a time stamp to at least a portion of said collected operating data. According to a further embodiment, a time stamp may also be applied to operating data during said step of collecting operating data.

According to another embodiment, converting a format of at least a portion of said collected operating data from a source format to a target format facilitates maintaining operating data in a standardized form, which is defined by said target format. Thus, even operating data portions from different sources with different log file data formats and the like may be combined to form a common data basis for further evaluation.

According to another embodiment, cleansing said operation data, e.g. in terms of unifying different formats and/or synchronizing timestamps etc., is also possible.

According to a further embodiment, said one or more predetermined events are parameterized. This means that the events are associated with both meta data and state information. For example, said meta data and state information may comprise information on sensor data or measured values, time stamp information, device IDs of devices associated with the respective events, information on sensor data or measured values, device IDs of devices associated with respective events, duration of actions, deviation from defined standard values, information on a general state or operational procedures, and the like.

According to a further embodiment, a semantic rule language (SRL, German: "semantische Regelsprache") and/or state graphs are used to characterize one or more relationships between said one or more predetermined events and said indications.

Thereby, a formalized and efficient description of relationships between events and said indications is enabled on a semantic basis, and the operating data and/or said collected operating data may be processed according to the rules of said semantic rule language.

According to a further embodiment, a plurality of rules is defined, wherein said rules characterize one or more relationships between
- a) said one or more predetermined events and said indications, and/or between
- b) said one or more predetermined events and one or more symptoms, and/or between
- c) said one or more symptoms and said indications.

As already mentioned above, according to an embodiment, these rules may be defined by means of a semantic rule language.

According to a further embodiment, different rule modules are provided, wherein each of said different rule modules comprises one or more rules of said plurality of rules. In other words, the different rule modules represent different groups of one or more rules, whereby increased flexibility regarding evaluation of operating data and/or processed operating data and/or said (identified) events is attained.

According to a further embodiment, one or more of said rule modules are selectively used, particularly depending on a predetermined context, wherein said context depends on at least one of: availability of operating data and/or collected operating data and/or identified events, a specific component of said technical system, a specific period of time.

Thus, advantageously, the method according to the embodiments may be performed on such data (e.g. processed operating data), which is already available, and it can be avoided to evaluate rules the application of which is not useful at a specific point in time because important operating data for evaluation of said rules is not yet available. In other words, the concept of the rule modules according to an embodiment advantageously enables to process at least portions of operating data or events identified therefrom even if further portions of data are not yet available. According to a further embodiment, this may be the case if some portions of data are available in real time or near real time fashion, and if other portions of data can only be collected or processed with a comparatively low frequency (e.g. once a day or a week or the like).

According to a further embodiment, said predetermined context may also depend on a specific component of said technical system. Thus, only such rule modules and their corresponding rules may be used which are relevant to said specific component of the technical system.

According to a further embodiment, said predetermined context may also depend on a specific number of components of said technical system such as e.g. collocated components. This enables to selectively e.g. analyze various machines of the technical system that experience similar environmental conditions such as particularly high or low temperatures or the like.

According to a further embodiment, said predetermined context may also depend on a specific time interval for which an analysis of the technical system is to be performed, e.g. specific days or the like.

According to a further embodiment, the predetermined context which influences the selection of rule modules may also depend on any combination of the aforementioned aspects.According to a further embodiment, it is also possible to determine error conditions related to the technical system depending on the indications which are derived from the identified events. For this process it is also possible to employ a semantic rule language and/or state graphs to characterize one or more relationships between said one or more indications and said error condition(s).

According to a further embodiment, said operating data comprises at least one of: sensor data of at least one sensor device of said technical system, log file data of at least one component of said technical system, error memory data of at least one component of said technical system, reference data characterizing the contents of said sensor data and/or of said log file data and/or of said error memory data for at least one predetermined operational state of said technical system.

For example, the technical system an operation of which is to be analyzed may be a complex machine such as a turbine or a wind energy generator, or even a whole technical installation such as a power plant, e.g. a nuclear power plant and the like.

Potential sources of operating data to be analyzed according to the principle of the embodiments may e.g. be single sensor devices of the technical system or installation, which may e.g. be distributed over the technical system or installation and may or may not be interconnected by data communication buses, local area networks or wireless communications networks or the like, or a plurality of sensor devices or generally any device or component of the technical system capable of providing operating data.

According to an embodiment, sensor data may e.g. comprise analog or digital data derived from sensor devices which generate said sensor data depending on physical parameters such as temperature, pressure, electric voltages and/or currents, and the like.

According to an embodiment, log file data may e.g. comprise operating data of specific components of the technical systems such as electric control units and the like. For example, when considering a wind energy plant, log file data from an electric control unit which controls a rotor blade pitch may be considered to form part of the operating data.

Likewise, error memory data may be considered according to the principle of the embodiments, wherein an error memory usually comprises error information on errors during an operation of a specific component of the technical system such as e.g. a specific electronic control device.

According to an embodiment, reference data may also be considered as operating data, said reference data e.g. defining desired value ranges for parameters of a considered component or the technical system. Reference data may e.g. be obtained during a calibration of the technical system or may be defined depending on the characteristic properties of the technical system, e.g. without measurements.

According to a further embodiment, said step of collecting operating data comprises requesting and/or receiving data from at least one component of said technical system, wherein said process of requesting and/or receiving data may e.g. performed using existing data communication infrastructure such as local wired or wireless networks, wide area networks, the Internet, satellite communication networks, ad-hoc data transmission mechanisms such as e.g. Bluetooth and/or ZigBee and/or Wifi connections or the like, or combinations thereof.

Generally, the system according to the embodiments may be collocated with the technical system an operation of which is to be analyzed. However, according to further embodiments, it is also possible to provide the system according to the embodiments remotely, i.e. at another location.

A further solution to the object of the present invention is given by a system according to claim 8.

### Brief description of the figures

Further features, aspects and advantages of the present invention are given in the following detailed description with reference to the drawings in which:
- Figure 1: depicts a simplified flow-chart of a method according to the embodiments,
- Figure 2a: schematically depicts a machine and system according to an embodiment,
- Figure 2b: schematically depicts a wind energy plant and a system according to an embodiment,
- Figure 3: schematically depicts a data flow in the context of a method according to an embodiment,
- Fig. 4a: schematically depicts expressions of a semantic rule language according to an embodiment, and
- Fig. 4b: schematically depicts a state graph according to an embodiment.

### Description of the embodiments

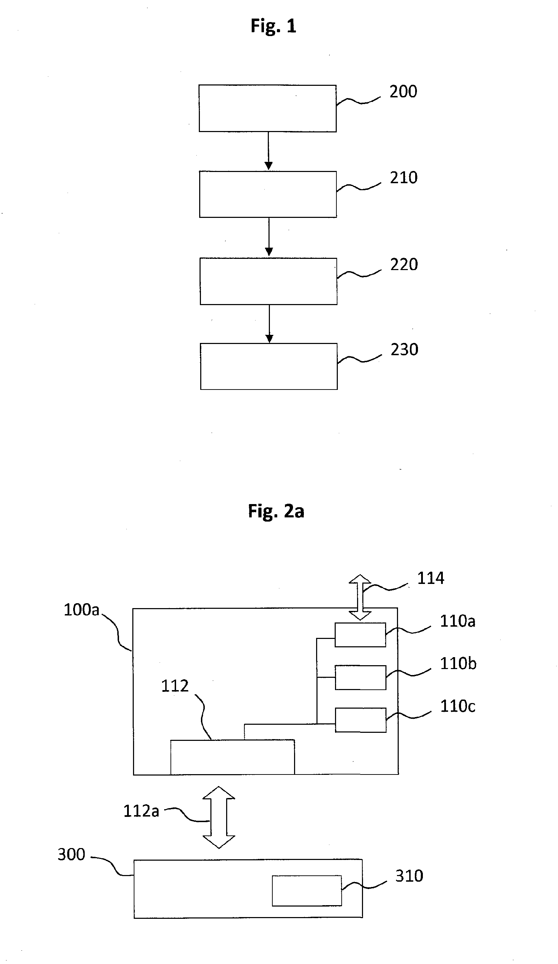

Figure 1 depicts a simplified flow-chart of a method of analyzing an operation of a technical system. As an example for such technical system, a complex machine 100a is schematically depicted by Fig. 2a.

The machine 100a may e.g. be a gas turbine or the like and may comprise a plurality of electronic control units (ECU) and/or sensor devices 110a, 110b, 110c which generate operating data that characterizes an operation of said turbine 100a.

As an example, the device 110a is an ECU controlling functions of the turbine 100a in a conventional manner. During this process, operating data such as physical parameters obtained from sensor devices 110b, 110c and/or internal parameters of said ECU 110a is obtained.

This operating data is provided to the system 300 which is configured to perform the method according to the embodiments an example of which will be explained below with reference to the flow-chart of Fig. 1.

The turbine 100a comprises a data interface 112 for data exchange with external devices such as the system 300. The data interface 112 may comprises local wired or wireless networks, wide area networks, the Internet, satellite communication networks or combinations thereof.

Additionally or as an alternative, the data interface 112 may also be configured to interface a memory unit or storage device such as a USB (universal serial bus) memory device and/or a hard disk system and/or an optical storage system or the like, wherein exchange of data between the devices 100a, 300 may be effected by alternately connecting said storage devices to either component 100a, 300. However, to enable a continuous data exchange between the devices 100a, 300, a wired or wireless network interface such as e.g. two LANs bridged by an Internet connection, may form a preferred embodiment.

As can be seen from Fig. 2a, the turbine 100a may also comprise a local data network which enables data communication between the ECU 110a and sensor devices 110b, 110c which may e.g. be configured to collect various physical operating parameters of the turbine 100a such as e.g. temperature values of different parts of the turbine 100a, pressure values, and the like. By using the local data network, these temperature values and the like may be forwarded from the sensor devices 110b, 110c to the ECU 110a.

According to an embodiment, the ECU 110a may also comprise an own data interface 114 which may use the various data communication technologies as mentioned above with reference to the interface 112a. Thus, the ECU 110a may directly provide its operating data and collected sensor data from devices 110b, 110c to the system 300, i.e. without using the interface 112a.

To ensure a reliable operation of the turbine 100a, the system 300 according to the embodiments performs the method of analyzing an operation of a technical system an embodiment of which is exemplarily depicted by the flow-chart of Fig. 1.

In a first step 200, operating data which characterizes an operation of the turbine 100a (Fig. 2a) is collected to obtain collected operating data.

According to an embodiment, said operating data comprises at least one of: sensor data of at least one sensor device 110b, 110c of the turbine 100a. Said operating data may also comprise log file data of the ECU 110a, as well as e.g. error memory data which is stored in an error memory of the ECU 110a and which comprises information of errors detected by the ECU 110a during the operation of the turbine 100a so far.

According to a further embodiment, said operating data may also comprise reference data characterizing the (desired) contents of said sensor data and/or of said log file data and/or of said error memory data for at least one predetermined operational state of the turbine 100a. I.e., regarding the sensor data of the sensor devices 110b, 110c, the reference data may provide predetermined maximum and/or minimum values which are expected not to be exceeded during regular operation of the turbine, and the like.

The collection 200 of operating data by the system 300 (Fig. 2a) may e.g. performed by using the data interface 112a and/or the further interface 114. According to one embodiment, the system 300 is configured to request the operating data to be collected from the turbine 100a or its ECU 110a, respectively, and/or from the sensor devices 110b, 110c. According to a further embodiment, the devices 110a, 110b, 110c may also be configured to periodically transmit said data to the system 300.

The step 200 (Fig. 1) of collecting may e.g. comprise at least temporarily storing or buffering the collected operating data, e.g. in a RAM or the like.

After that, in step 210, the collected operating data obtained in step 200 is processed, cf. step 210, whereby processed operating data is obtained by the system 300.

According to an embodiment, the system 300 may comprise one or more processing units 310 such as central processing units (CPUs) or the like for performing diverse tasks such as controlling the operation of the system 300 in general and/or performing inter alia the step 210 of processing of collected operating data.

According to a further embodiment, said step 210 of processing comprises at least one of: storing at least a portion of said collected operating data (e.g. copying the data from a buffer RAM to a non-volatile storage system), sorting at least a portion of said collected operating data to facilitate future access to said collected operating data, applying a time stamp to at least a portion of said collected operating data, converting a format of at least a portion of said collected operating data from a source format to a target format.

For example, if the operating data collected from the sensor device 110b comprises a different format as compared to the operating data collected from the further sensor device 110c, format conversion to a common target format enables an efficient further processing of said data within the system 300.

Optionally, according to a further embodiment, said step of processing 210 may also be omitted.

Subsequently, in step 220, the system 300 determines whether one or more predetermined events are comprised in said collected operating data and/or said processed operating data to obtain one or more identified events.

According to a further embodiment, said one or more predetermined events are parameterized. This means that the events are associated with both meta data and state information. For example, said meta data and state information may comprise information on sensor data or measured values, time stamp information, device IDs of devices associated with the respective events, and the like.

As an example, an event may e.g. represented by a certain sensor value as obtained by the devices 110b, 110c at a specific point in time. As a further example, an event may also be represented by a sensor value exceeding a predetermined threshold, and the like. Meta data of events may e.g. denote a specific physical unit for interpreting the sensor value, such as e.g. a SI unit (as defined by the International System of Units) or the like. E.g., an event may comprise a sensor value of "10" and meta data specifying that the SI unit of "seconds" is associated with said sensor value, whereby a proper interpretation of the event in the sense of "10 seconds" is enabled.

Optionally, an event may also comprise time stamp information and the like.

According to one embodiment, the system 300 determines in step 220 whether a predetermined number of predetermined events is comprised within the collected and/or processed operating data. This may e.g. be done by searching the operating data for any occurrence of the specified events. Searching may be facilitated by employing one or more search indexes which may be provided by an external device (i.e., not by the system 300). Alternatively, according to one embodiment, the system 300 may also be configured to create one or more search indexes on the operating data to accelerate the operations of method step 220.

As a possible outcome of step 220, the system 300 may have determined that certain predetermined events (or at least some of these predetermined events) are indeed comprised in the operating data, i.e. either in the collected operating data and/or in the processed operating data, which are referred to as identified events.

Hence, if a specific predetermined event could not be identified in said collected operating data and/or in the processed operating data, it is not considered to form part of the "identified events" in the sense of the embodiments.

After said step 220, a subsequent step 230 is performed, which comprises determining, based on said one or more identified events, one or more indications which characterize an operational state and/or a transition between operational states of said technical system, i.e. the turbine 100a (Fig. 1).

The determination 220 whether predetermined events can be found in the operating data and the determination 230 of said one or more indications based on so identified events advantageously enables an efficient analysis of the operation of the turbine 100a which can be automated to a high degree, e.g. in the form of processing by means of the system 300. Thus, even such technical systems 100a or their operation, respectively, can reliably be analyzed which yield an amount of operating data that cannot be handled by human experts any more.

By considering the predetermined events and indications according to the principle of the embodiments, relationships between one or more portions of said operating data may be analyzed in a well-defined, standardized manner which ensures a constant quality of information on an operational state and/or state transitions of the technical system 100a.

According to an embodiment, the above explained steps 200, 210, 220, 230 or at least some steps thereof may be performed periodically or in real-time. Instead of the sequence depicted by Fig. 1, according to a further embodiment, at least some of the steps 200, 210, 220, 230 may be performed in parallel.

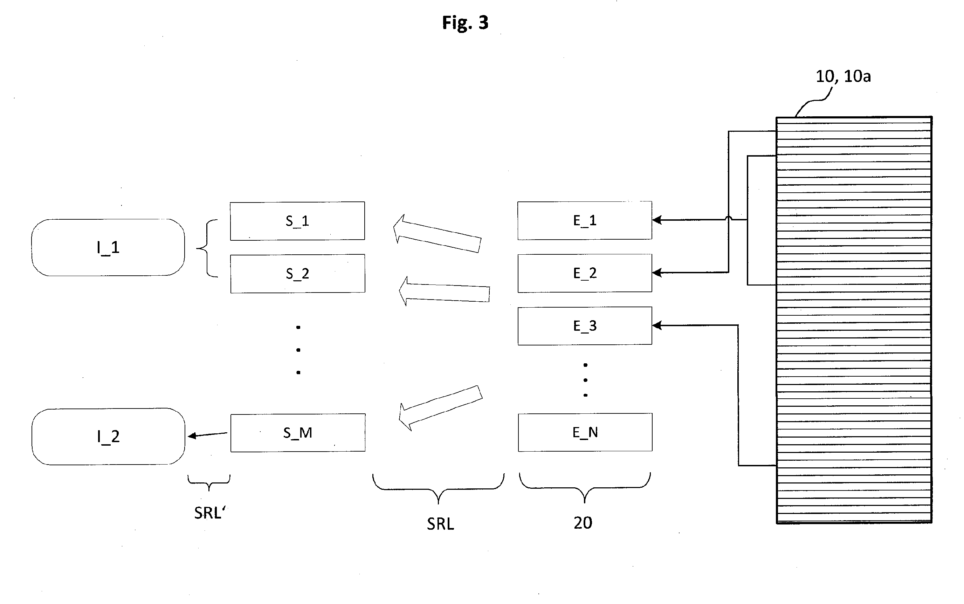

Fig. 3 schematically depicts a data flow according to an embodiment. This data flow may e.g. be obtained during operation of the system 300 according to the method as explained above with reference to the flow-chart of Fig. 1.

As already explained above, in the first step 200, operating data which characterizes an operation of the turbine 100a (Fig. 2a) is collected to obtain collected operating data 10, cf. Fig. 3. The collected operating data 10 may also be processed, cf. step 210 as explained above, whereby processed operating data 10a is obtained. The collected operating data 10 and/or processed operating data 10a may be stored by the system 300 in a suitable storage system for further processing.

Based on the data 10, 10a, it is determined in step 220 (Fig. 1) whether predetermined events E_1, E_2, E_3 (Fig. 3) are comprised in said data 10, 10a. In Fig. 3, all possible predetermined events E_1, E_2, E_3, ..., E_N are collectively denoted by the reference numeral 20, and the identified events in the sense of the embodiments may form a subset of the events 20.

After that, in step 230, the system 300 determines, based on said one or more identified events, one or more indications I_1, I_2 which characterize an operational state and/or a transition between operational states of said turbine 100a. I.e., the system 300 may conclude that a specific indication I_1, which indicates a corresponding operational state of the turbine 100a, is present, if a specific number and/or combination of events is present among the identified events.

An indication I_may e.g. indicate that the turbine 100a is operating within normal parameters. An indication may also indicate that there is a certain probability that a malfunction of the turbine 100a will occur, and the like. The specific meaning of the indications depends on the events considered for determining the indications based thereon and may e.g. be specified by an operator of the system 300.

For assessing whether a specific indication I_1 is present, a temporal sequence of the considered events (e.g. indicated by their time stamps) may also be relevant. I.e., an indication I_1 may be given if two events E_1, E_N could be identified in the temporal sequence E_N, E_1, e.g. event E_N preceding event E_1. Otherwise, if e.g. event E_1 is preceding event E_N, said indication I_1 would not be present.

Likewise, additionally or alternatively, specific properties of meta data related to the identified events may be considered for assessing whether an indication I_1 is present or not.

According to a further embodiment, indications I_1, I_2 may directly be derived from (identified) events E_1, ..., E_N.

According to another embodiment, instead of directly deriving indications I_1, I_2 from (identified) events E_1, .., E_N, as an intermediate stage of evaluation, symptoms S_1, S_2, ... , S_M may be determined from said (identified) events E_1, .., E_N, and on the basis of these symptoms S_1, S_2, ... , S_M, i.e. their presence or absence, indications I_1, I_2 may be determined.

For both variants, according to a preferred embodiment, a semantic rule language SRL and/or state graphs may be used to characterize one or more relationships between said one or more predetermined events E_1, E_2, E_3 and said indications I_1, I_2.

These relationships may e.g. be predetermined and stored by the system 300, so that they can be used during steps 220, 230 of Fig. 1. For example, the relationships between the events and the symptoms and/or between the events and the indications may be specified by human experts employing the semantic rule language SRL and/or state graphs. This enables to transfer human expert knowledge in a formalized manner to the system 300 which may advantageously employ said expert knowledge in an automated fashion to analyze the operation of the turbine 100a.

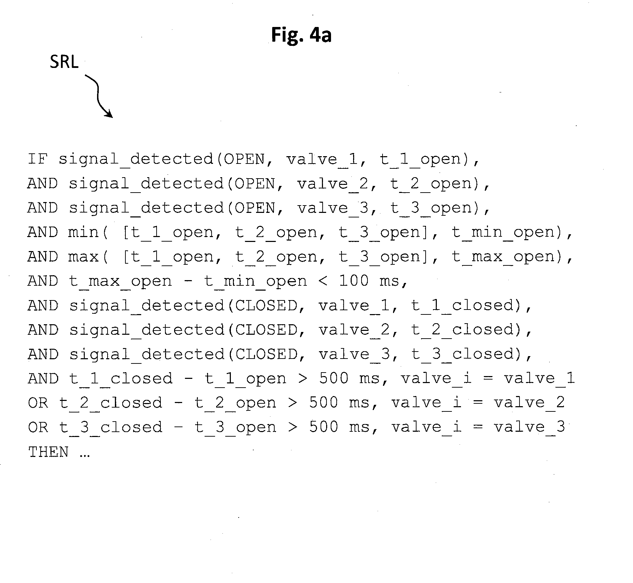

Fig. 4a schematically depicts fragments of a semantic rule language SRL which can be used to define relationships between events that may be retrieved in the operating data 10 (Fig. 3) and/or the processed operating data 10a.

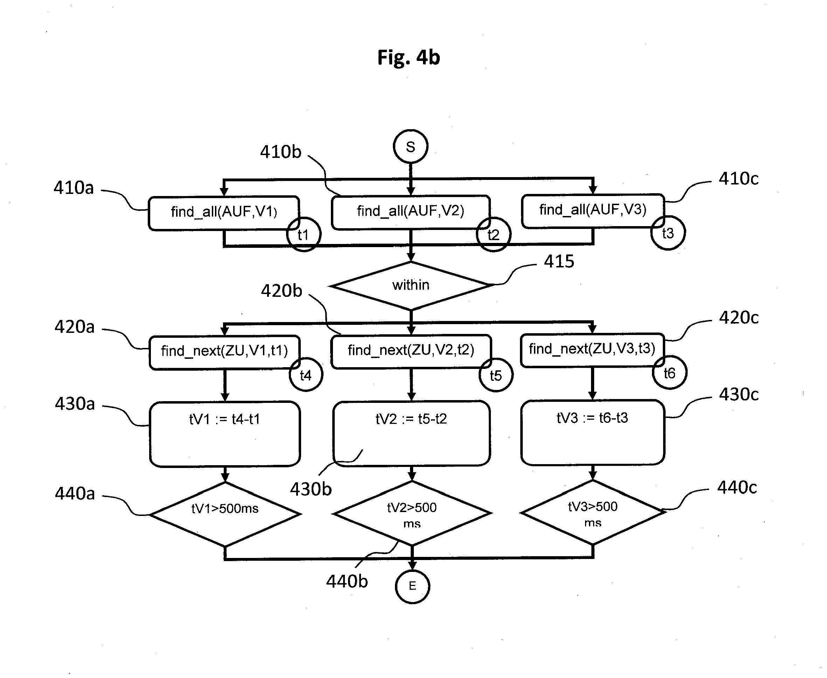

Fig. 4b schematically depicts a state graph which may be used alternatively or in addition to the semantic rule language SRL of Fig. 4a.

Blocks 410a, 410b, 410c of the state graph according to Fig. 4b schematically depict a determination whether specific predetermined events "AUF" (engl.: open) are comprised in collected and/or processed operating data, wherein block 410a exemplarily denotes such determination for a technical component "V1" of the technical system to be analyzed, while blocks 410b, 410c denote such determination for further technical components "V2", "V3" of the technical system.

Similarly, blocks 420a, 420b, 420c of the state graph according to Fig. 4b schematically depict a determination whether specific predetermined events "ZU" (engl.: closed) are comprised in said collected and/or processed operating data, wherein block 420a exemplarily denotes such determination for the technical component "V1" of the technical system to be analyzed, while blocks 420b, 420c denote said determination for the further technical components "V2", "V3" of the technical system.

If the respective events can be determined, time values t1, t2, t3, t4, t5, t6 are obtained which denote the specific point in time of the predetermined event.

In blocks 430a, 430b, 430c time differences tV1, tV2, tV3 are determined, which are associated with the respective technical components "V1", "V2", "V3". E.g., time difference tV1 indicates a time difference t4 - t1 between an identified event at time t4 which indicates that technical component "V1" assumes a closed state "ZU" and an identified event at time t1 which indicates that same technical component "V1" assumes an open state "AUF".

For the further components "V2", "V3", a similar analysis is made.

Subsequently, indicated by steps 440a, 440b, 440c in combination with step 415, the system according to the embodiments determines whether any of said time differences tV1, tV2, tV3 exceeds a predetermined threshold value of e.g. 500 ms. If so, according to one embodiment, the system may determine that a corresponding indication I_1 (Fig. 3) is present which characterizes a specific operational state of the analyzed technical system.

From the presence or absence of these indications I_1, insights relating to the operation of the technical system may be obtained.

According to an embodiment, steps 410a, 410b, 410c, 420a, 420b, 420c may e.g. be performed by searching corresponding event information in collected operating data and/or processed operating data, which may have been collected prior to executing said steps410a, 410b, 410c, 420a, 420b, 420c. Advantageously, said events may be identified by using one or more search indices which have been generated depending on said collected operating data and/or processed operating data, either by the system according to the embodiments and/or by another system.

As already explained above, alternatively to said state graph or in addition thereto, a semantic rule language (cf. Fig. 4a) may be used to describe which events are to be identified from collected and/or processed operating data.

According to an embodiment, a plurality of rules is defined, wherein said rules characterize one or more relationships between a) said one or more predetermined events and said indications, and/or between b) said one or more predetermined events and one or more symptoms, and/or between c) said one or more symptoms and said indications.

For example, with the embodiment as depicted by Fig. 3, items b) and c) of the preceding list are used, because based on the identified events 20 symptoms S_1, S_2, .., S_M are derived by means of an SRL and corresponding rules, and based on these symptoms S_1, S_2, .., S_M indications I_1, I_2 are derived by means of an SRL' and corresponding rules.

As already mentioned above, according to an embodiment, these rules may be defined by means of a semantic rule language. Examples for such SRL are given by Fig. 4a, wherein the depicted text lines correspond to parts of a rule of said SRL. As can be seen from Fig. 4a, the exemplarily depicted rule is related to determining events such as "OPEN" and "CLOSED" states of technical components (valve_1, valve_2, valve_3) and associated points in time.

According to a further embodiment, different rule modules are provided, wherein each of said different rule modules comprises one or more rules of said plurality of rules. In other words, the different rule modules represent different groups of one or more rules, whereby increased flexibility regarding evaluation of operating data 10 (Fig. 3) and/or processed operating data (10a) and/or said (identified) events 20 is attained.

According to a further embodiment, one or more of said rule modules are selectively used, particularly depending on a predetermined context, wherein said context depends on at least one of: availability of operating data 10 and/or collected operating data 10a and/or identified events, a specific component of said technical system, a specific period of time.

Thus, advantageously, the method according to the embodiments may be performed on such data (e.g. processed operating data 10a), which is already available, and it can be avoided to evaluate SRL rules the application of which is not useful at a specific point in time because important operating data for evaluation of said rules is not yet available. In other words, the concept of the rule modules according to an embodiment advantageously enables to process at least portions of operating data or events identified therefrom even if further portions of data are not yet available. According to a further embodiment, this may be the case if some portions of data are available in real time or near real time fashion, and if other portions of data can only be collected or processed with a comparatively low frequency (e.g. once a day or a week or the like).

In other words, in the context of the embodiment depicted by Fig. 3, by using a first rule module comprising SRL rules, symptoms S_1, S_2 may be determined based on events E_1, E_2, E_3 (and optionally indication I_1 may be derived based on the so identified symptoms). However, as events E_N have not yet been analyzed by now, e.g. because of the fact that respective operating data is missing or available operating data has not yet been (fully) processed, further rules of the SRL, which form part of a second rule module, are not yet evaluated. For example, they will be evaluated as soon as the respective (processed) operating data is available.

According to a further embodiment, said predetermined context for usage of said rule modules may also depend on a specific component of said technical system. Thus, only such rule modules and their corresponding rules may be used which are relevant to said specific component of the technical system.

According to a further embodiment, said predetermined context may also depend on a specific number of components of said technical system such as e.g. collocated components. This enables to selectively e.g. analyze various machines of the technical system that experience similar environmental conditions such as particularly high or low temperatures or the like, while other components of the same system, which experience different environmental conditions due to a different location are not considered by the respective rule module.

According to a further embodiment, said predetermined context may also depend on a specific time interval for which an analysis of the technical system is to be performed, e.g. specific days or the like.

According to a further embodiment, the predetermined context which influences the selection of rule modules may also depend on any combination of the aforementioned aspects.

Both the semantic rule language SRL as exemplified by Fig. 4a and/or state graphs as exemplified by Fig. 4b may be provided to the system 300 (Fig. 2a) by means of a suitable interface (e.g., personal computer with graphical user interface and/or text interface or the like, not shown). Thus, an operator of the system 300 is enabled to specify events, constellations of a plurality of events, and the like which take into account the functional and/or temporal relationships of the various operating parameters of the system 100a so that symptoms S_1, S_2, .. and/or indications I_1, I_2 may be determined in an automated fashion by the system thus providing reliably and precise information on an operational state or state transitions of the system 100a.

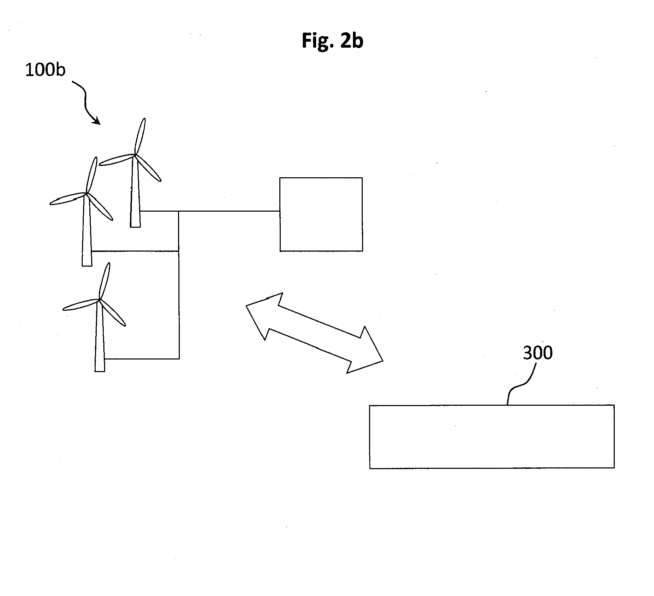

Fig. 2b depicts a wind power plant comprising several wind energy generators (WEG) which are connected to a transformer station to provide electrical energy in a per se known manner. Control units (not shown) of the individual WEGs may provide their operating parameters and sensor data and the like to system 300 which collects these data to obtain the collected operating data 10 as explained above with respect to Fig. 3. Similar to the turbine 100a of Fig. 2a, the system 300 may perform the method as explained above with reference to Fig. 1 for the whole wind power plant 100b to automatically analyze the operation of the wind power plant or single components thereof, whereby early indications of future malfunctions or deterioration of single components of the system 100b may be obtained.

According to an embodiment, a first SRL-based rule module may e.g. be provided for analysis of the wind energy generators of system 100b, while another SRL-based rule module may e.g. be provided for analysis of the transformer station. Thereby, operating data of the whole system 100b may selectively be analyzed which avoids unnecessary data processing of log files and the like not contributing to answering a specific question related to only some components of the whole system 100b.

According to a further embodiment, a specific SRL-based rule module may e.g. provided for a specific type of electric current sensor that may be used throughout all components of the system 100b. The specific rule module ensures that operating data not related to said specific type of electric current sensor - independent of the various components of systems 100b - is not considered during analysis.

According to a further embodiment, the system 300 (Fig. 2a) may be configured to store a plurality of SRL rules and/or rule modules, possibly also for different technical systems 100a, 100b to be analyzed. The system may comprises appropriate man machine interfaces to enable one or more human operators such as technicians to define SRL rules and/or rule modules for the various technical systems. The system 300 may also comprise an SRL management system for maintaining different SRL rules and/or modules, also for different versions of said SRL rules and/or modules, which enables human operators to revise rules and to activate/deactivate rules and/or to redefine rule modules.

The principle of the embodiments advantageously enables to reliably analyze an operation of a complex technical system 100a, 100b such as a complex machine or even a plurality of machines or a whole plant, e.g. a power plant or the like. By employing the principle based on determining events depending on collected and/or processed operating data 10, 10a and based on further determining symptoms and/or indications, a highly efficient real-time capable analysis of complex systems is enabled which may make use of expert knowledge that can be specified by using the semantic rule language and/or state graphs.

For example, the operation of systems comprising about five thousand ECUs and/or sensor devices and more may be analyzed by means of the inventive principle, even if the ECUs and sensor devices provide different output formats for their operating data and sensor values. The inventive collection and optional processing of said data enables efficient retrieval/identification of events, and on the basis of so identified events, symptoms and/or indications may be determined.

According to a further embodiment, an operation of the system 100a, 100b or components thereof may be controlled in the sense of a closed-loop control depending on identified events, symptoms and/or indications as obtained during application of the process according to the embodiments, whereby the risk of impending malfunctions may be reduced or certain undesired operational states may even be avoided.

## Claims

1. Method of analyzing an operation of a technical system (100a, 100b), particularly of a machine (100a) and/or a technical installation (100b), comprising the following steps:
- collecting (200) operating data which characterizes an operation of said system (100a, 100b), to obtain collected operating data (10),
- processing (210) said collected operating data (10) according to predetermined criteria to obtain processed operating data (10a),
- determining (220) whether one or more predetermined events (E_1, E_2, E_3) are comprised in said collected operating data (10) and/or said processed operating data (10a) to obtain one or more identified events,
- determining (230), based on said one or more identified events, one or more indications (I_1, I_2) which characterize an operational state and/or a transition between operational states of said technical system (100a, 100b).

2. Method according to claim 1, wherein one or more search indexes depending on said collected operating data (10) and/or depending on said one or more predetermined events (E_1, E_2, E_3) are created and/or used.

3. Method according to one of the preceding claims, wherein said step of processing (210) comprises at least one of:
- storing at least a portion of said collected operating data (10),
- sorting at least a portion of said collected operating data (10),
- applying a time stamp to at least a portion of said collected operating data (10),
- converting a format of at least a portion of said collected operating data (10) from a source format to a target format.

4. Method according to one of the preceding claims, wherein said one or more predetermined events (E_1, E_2, E_3) are parameterized.

5. Method according to one of the preceding claims, wherein a semantic rule language (SRL) and/or state graphs are used to characterize one or more relationships between said one or more predetermined events (E_1, E_2, E_3) and said indications (I_1, I_2).

6. Method according to one of the preceding claims, wherein a plurality of rules is defined, wherein said rules characterize one or more relationships between
- a) said one or more predetermined events (E_1, E_2, E_3) and said indications (I_1, I_2), and/or between
- b) said one or more predetermined events (E_1, E_2, E_3) and one or more symptoms (S_1, S_2), and/or between
- c) said one or more symptoms (S_1, S_2) and said indications (I_1, I_2).

7. Method according to claim 6, wherein different rule modules are provided, wherein each of said different rule modules comprises one or more rules of said plurality of rules.

8. Method according to claim 7, wherein one or more of said rule modules are selectively used, particularly depending on a predetermined context, wherein said context depends on at least one of: availability of operating data and/or collected operating data and/or identified events, a specific component of said technical system (100a, 100b), a specific period of time.

9. Method according to one of the preceding claims,
wherein operating data comprises at least one of:
- sensor data of at least one sensor device of said technical system (100a, 100b),
- log file data of at least one component of said technical system (100a, 100b),
- error memory data of at least one component of said technical system (100a, 100b),
- reference data characterizing the contents of said sensor data and/or of said log file data and/or of said error memory data for at least one predetermined operational state of said technical system (100a, 100b).

10. Method according to one of the preceding claims,
wherein said step of collecting (200) operating data comprises requesting and/or receiving data from at least one component of said technical system (100a, 100b).

11. System (300) for analyzing an operation of a technical system (100a, 100b), particularly of a machine (100a) and/or a technical installation (100b), the system being configured for:
- collecting (200) operating data which characterizes an operation of said system, to obtain collected operating data (10),
- processing (210) said collected operating data (10) according to predetermined criteria to obtain processed operating data (10a),
- determining (220) whether one or more predetermined events (E_1, E_2, E_3) are comprised in said collected operating data (10) and/or said processed operating data (10a) to obtain one or more identified events,
- determining (230), based on said one or more identified events, one or more indications (I_1, I_2) which characterize an operational state and/or a transition between operational states of said technical system (100a, 100b).

12. System (300) according to claim 11, wherein said system (300) is configured to create and/or use one or more search indexes depending on said collected operating data (10) and/or depending on said one or more predetermined events (E_1, E_2, E_3).

13. System (300) according to one of the claims 11 to 12, wherein said step of processing (210) comprises at least one of:
- storing at least a portion of said collected operating data (10),
- sorting at least a portion of said collected operating data (10),
- applying a time stamp to at least a portion of said collected operating data (10),
- converting a format of at least a portion of said collected operating data (10) from a source format to a target format.

14. System (300) according to one of the claims 11 to 13, wherein said one or more predetermined events (E_1, E_2, E_3) are parameterized.

15. System (300) according to one of the claims 1 to 14, wherein the system (300) is configured to use a semantic rule language (SRL) and/or state graphs to characterize one or more relationships between said one or more predetermined events (E_1, E_2, E_3) and said indications (I_1, I_2).

## Amended claims

### Amended claims in accordance with Rule 137(2) EPC.

1. Method of analyzing an operation of a technical system (100a, 100b), particularly of a machine (100a) and/or a technical installation (100b), comprising the following steps:
- collecting (200) operating data which characterizes an operation of said system (100a, 100b), to obtain collected operating data (10),
- optionally, processing (210) said collected operating data (10) according to predetermined criteria to obtain processed operating data (10a),
- determining (220) whether one or more predetermined events (E_1, E_2, E_3) are comprised in said collected operating data (10) and/or said processed operating data (10a) to obtain one or more identified events,
- determining (230), based on said one or more identified events, one or more indications (I_1, I_2) which characterize an operational state and/or a transition between operational states of said technical system (100a, 100b).

2. Method according to claim 1, wherein one or more search indexes depending on said collected operating data (10) and/or depending on said one or more predetermined events (E_1, E_2, E_3) are created and/or used.

3. Method according to one of the preceding claims, wherein said step of processing (210) comprises at least one of:
- storing at least a portion of said collected operating data (10),
- sorting at least a portion of said collected operating data (10),
- applying a time stamp to at least a portion of said collected operating data (10),
- converting a format of at least a portion of said collected operating data (10) from a source format to a target format.

4. Method according to one of the preceding claims, wherein said one or more predetermined events (E_1, E_2, E_3) are parameterized, i.e. said events are associated with both meta data and state information.

5. Method according to one of the preceding claims, wherein a semantic rule language (SRL) and/or state graphs are used to characterize one or more relationships between said one or more predetermined events (E_1, E_2, E_3) and said indications (I_1, I_2).

6. Method according to one of the preceding claims, wherein a plurality of rules is defined, wherein said rules characterize one or more relationships between
- a) said one or more predetermined events (E_1, E_2, E_3) and said indications (I_1, I_2), and/or between
- b) said one or more predetermined events (E_1, E_2, E_3) and one or more symptoms (S_1, S_2), and/or between
- c) said one or more symptoms (S_1, S_2) and said indications (I_1, I_2).

7. Method according to claim 6, wherein different rule modules are provided, wherein each of said different rule modules comprises one or more rules of said plurality of rules.

8. Method according to claim 7, wherein one or more of said rule modules are selectively used, particularly depending on a predetermined context, wherein said context depends on at least one of: availability of operating data and/or collected operating data and/or identified events, a specific component of said technical system (100a, 100b), a specific period of time.

9. Method according to one of the preceding claims, wherein operating data comprises at least one of:
- sensor data of at least one sensor device of said technical system (100a, 100b),
- log file data of at least one component of said technical system (100a, 100b),
- error memory data of at least one component of said technical system (100a, 100b),
- reference data characterizing the contents of said sensor data and/or of said log file data and/or of said error memory data for at least one predetermined operational state of said technical system (100a, 100b).

10. Method according to one of the preceding claims, wherein said step of collecting (200) operating data comprises requesting and/or receiving data from at least one component of said technical system (100a, 100b).

11. System (300) for analyzing an operation of a technical system (100a, 100b), particularly of a machine (100a) and/or a technical installation (100b), the system being configured for:
- collecting (200) operating data which characterizes an operation of said system, to obtain collected operating data (10),
- optionally, processing (210) said collected operating data (10) according to predetermined criteria to obtain processed operating data (10a),
- determining (220) whether one or more predetermined events (E_1, E_2, E_3) are comprised in said collected operating data (10) and/or said processed operating data (10a) to obtain one or more identified events,
- determining (230), based on said one or more identified events, one or more indications (I_1, I_2) which characterize an operational state and/or a transition between operational states of said technical system (100a, 100b).

12. System (300) according to claim 11, wherein said system (300) is configured to create and/or use one or more search indexes depending on said collected operating data (10) and/or depending on said one or more predetermined events (E_1, E_2, E_3).

13. System (300) according to one of the claims 11 to 12, wherein said step of processing (210) comprises at least one of:
- storing at least a portion of said collected operating data (10),
- sorting at least a portion of said collected operating data (10),
- applying a time stamp to at least a portion of said collected operating data (10),
- converting a format of at least a portion of said collected operating data (10) from a source format to a target format.

14. System (300) according to one of the claims 11 to 13, wherein said one or more predetermined events (E_1, E_2, E_3) are parameterized, i.e. said events are associated with both meta data and state information.

15. System (300) according to one of the claims 11 to 14, wherein the system (300) is configured to use a semantic rule language (SRL) and/or state graphs to characterize one or more relationships between said one or more predetermined events (E_1, E_2, E_3) and said indications (I_1, I_2).
